Europäisches Patentamt

European Patent Office

Office européen des brevets

(11) Publication number: **0 217 568**
**B1**

(12) **EUROPEAN PATENT SPECIFICATION**

(45) Date of publication of patent specification: **21.03.90**

(21) Application number: **86306956.3**

(22) Date of filing: **10.09.86**

(51) Int. Cl.⁵: **B 01 D 63/06, B 01 D 29/25** //
**G21F9/04, C02F11/12**

(54) **Liquid treatment apparatus.**

(30) Priority: **24.09.85 GB 8523549**

(43) Date of publication of application:
**08.04.87 Bulletin 87/15**

(45) Publication of the grant of the patent:
**21.03.90 Bulletin 90/12**

(84) Designated Contracting States:
**BE DE FR IT**

(56) References cited:
**EP-A-0 203 862**
**FR-A-1 259 400**
**FR-A-2 234 912**
**FR-A-2 407 012**
**US-A-3 722 694**

(73) Proprietor: **British Nuclear Fuels PLC**
**Risley Warrington Cheshire, WA3 6AS (GB)**

(72) Inventor: **Gutman, Richard Guy**
**19 West Court West Street**
**Osney Oxford (GB)**
Inventor: **Williams, Gwilym Handel**
**52 Cumnor Road Lower Wootton**
**Boars Hill Oxford (GB)**
Inventor: **Wood, Dennis**
**"Chez d'Jou" Brightwell-cum-Sotwell**
**Wallingford Oxfordshire (GB)**

(74) Representative: **Mansfield, Peter Turquand**
**United Kingdom Atomic Energy Authority**
**Patents Branch Northern Research Laboratories**
**Risley Warrington WA3 6AT (GB)**

Courier Press, Leamington Spa, England.

## Description

This invention relates to liquid treatment apparatus comprising one or more ducts through which a liquid is to be passed, each duct having a wall permeable to at least a component of the liquid, and particularly but not exclusively to ultrafiltration apparatus.

A known ultrafiltration apparatus, described in British patent GB 1,468,928 (Union Carbide Corp.), comprises a plurality of parallel tubes arranged so that a liquid to be treated passes under pressure axially through the tubes. The tubes are porous and permeable, being composed of bonded carbon particles and an essentially continuous coating of metal oxide particles on the inside surface of the tubes. In operation of the apparatus some of the liquid and low molecular weight dissolved phases pass through the walls of the tubes, while most of the higher molecular weight dissolved phases and any particulate matter are carried through the tubes in the liquid concentrate. An ultrafiltration apparatus is described in US 3,722,694 (Agranat) in which a module or cartridge comprising a plurality of parallel ultrafiltration tubes is insertable into a housing which collects the filtrate. The module can readily be replaced.

Such an apparatus may be used to separate pure water from an oil/water or oil/water/dirt emulsion. Equally it may be used to remove water from a sludge of particulate matter and water. For example it might be used to dewater a sludge containing low-level radioactive material, before immobilizing the sludge by the addition of cement. However known types of ultrafiltration apparatus are not suitable for use in situations where installation and removal of the apparatus must be performed remotely, or where the apparatus itself must be located within a shielded enclosure providing very limited access.

According to the present invention there is provided a liquid treatment apparatus including a housing and a module insertable into the housing so as to be substantially enclosed within the housing, the module comprising a plurality of parallel tubes each having a wall permeable to at least a component of a liquid undergoing treatment, and the housing being adapted to collect a permeate liquid and defining an outlet port for the permeate liquid, characterised in that the housing is open at one end for insertion of the module, and at the other end defines an inlet port and an outlet port for the liquid undergoing treatment, and that the apparatus includes means such that on insertion into the housing the module comes into sealing engagement with the inlet port and the outlet port so that the tubes provide at least part of a path for the liquid undergoing treatment from the inlet port to the outlet port, this liquid path involving just one flow reversal for the liquid; and means for clamping the module to the housing at the open end of the housing.

The apparatus of the invention can readily be installed or dismantled remotely, as access to only one end of the housing (the open end) is needed, and furthermore the apparatus can be installed within a shielded enclosure with only the open end of the housing extending through a wall of the enclosure.

Preferably the module includes two header chambers at the insertable end of the module, one of which comes into communication with the inlet port and the other of which comes into communication with the outlet port on insertion of the module, each tube communicating with either one or other of the two header chambers at the insertable end, and a single header chamber at the other end of the module with which all the tubes communicate.

The invention will now be further described by way of example only, and with reference to the accompanying drawings in which:-

Figure 1 shows a longitudinal sectional view through an ultrafiltration apparatus embodying the invention; and

Figure 2 shows an enlarged view of the part of Figure 1 indicated by the circle A.

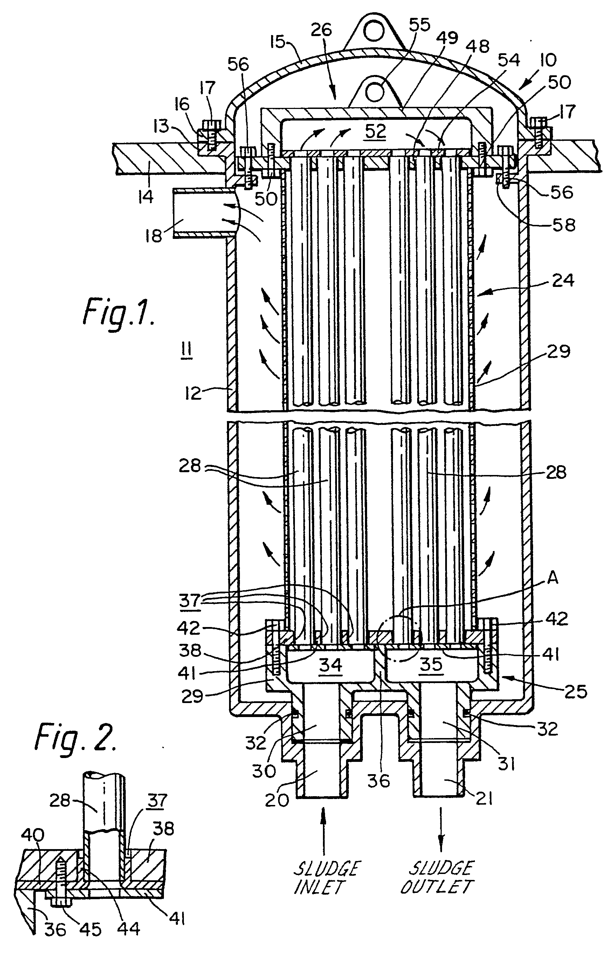

Referring to Figure 1, an ultrafiltration apparatus 10 as shown for dewatering a radioactive sludge, the apparatus 10 being installed within a shielded enclosure 11. The apparatus 10 includes a steel housing 12 of generally cylindrical shape with its longitudinal axis vertical, open at its top end and with an external flange 13 around the open end by which the housing 12 is supported through a hole in the roof 14 of the enclosure 11. A lid 15 with a matching flange 16 covers the open end of the housing 12, and is clamped to it by bolts 17. Near the top of the housing 12 is an outlet duct 18 for permeate water to leave the housing 12, while at the bottom of the housing 12 are an inlet port 20 and an outlet port 21 for the sludge to be treated.

An ultrafiltration module 24 is located within the housing 12. The module 24 consists of a lower assembly 25, an upper assembly 26, two semicircular arrays of parallel ultrafiltration tubes 28 which extend between the lower assembly 25 and the upper assembly 26, and a perforated cylindrical protective steel sleeve 29 surrounding all the tubes 28. Only three tubes 28 of each array are shown. Each tube 28 is of bonded carbon particles with an essentially continuous coating of metal oxide particles on its inside surface, the permeability being such that with a pressure difference of several atmospheres (for example 700 kPa) water from the sludge is caused to pass through the walls of the tubes 28. The sludge flows upwardly in the tubes 28 of one array and flows back down in the tubes 28 of the other array.

The lower assembly 25 includes a lower portion 29 which defines two projecting stub pipes 30 and 31 which mate with the sludge inlet port 20 and outlet port 21 in the housing 12 respectively, O-rings 32 providing a leak-proof seal. At their upper ends the stub pipes 30 and 31 open out into two semicircular headers, 34 and 35 respectively, separated by a diametral wall 36. The tubes 28 are sealingly connected to the lower assembly 25 through corresponding holes 37 in a flat plate 38. The seal is provided by a rubber gasket 40 (shown in Figure 2) sandwiched between the lower face of the flat plate 38 and two semicircular perforated sheets 41, one in each header 34 and 35. The flat plate 38 is held to the lower portion 29 by bolts 42, and forms the top of the headers 34 and 35, so that each tube 28 communicates with either one or the other of the headers 34 and 35. Referring to Figure 2, the gasket 40 also defines collars 44 which fit around the open ends of the tubes 28, between each tube 28 and the wall of the corresponding hole 37. The perforated sheets 41 are clamped to the flat plate 38 by bolts 45, and the holes through the sheets 41 align with those through the plate 38. The gasket 40 also provides a seal between the wall 36 and the plate 38.

The upper assembly 26 comprises a flat plate 48 and a cap portion 49, held together by bolts 50, and together defining a common header 52 for all the tubes 28. The tubes 28 are sealingly connected to the upper assembly 26 through corresponding holes in the plate 48, the seal being provided in a similar way to that described above by a rubber gasket (not shown) sandwiched between the upper face of the plate 48 and a thin perforated sheet 54, the gasket also defining a collar (not shown) around the top end of each tube 28. The cap portion 49 is provided with a bracket 55 so that the assembled module 24 can be inserted into or lifted out of the housing 12, after removal of the lid 15. The flat plate 48 is of greater diameter than the rest of the module 24, and has a number of peripheral unthreaded holes through which bolts 56 can be inserted to engage in threaded holes in an internal flange 58 on the housing 12, so as to clamp the module 24 into the housing 12.

In operation of the ultrafiltration apparatus 10 assembled as described above, a radioactive sludge is pumped into the inlet port 20 at a pressure of for example 500 kPa, and flows through the module 24, passing into the header 34, up one array of tubes 28 to the header 52, back down the other array of tubes 28 to the header 35, and so out of the outlet port 21. The emerging sludge is more concentrated than the inflowing sludge, as during its passage through the tubes 28 some of the water passes through the permeable walls of the tubes 28 into the housing 12, to flow out of the outlet duct 18, where the pressure is typically about atmospheric.

It will be appreciated that although the module 24 has two semicircular arrays of tubes 28 and two semicircular headers 34 and 35 in the lower assembly 25, an alternative module might have differently shaped arrays of tubes 28 and so differently shaped headers. For example a module (not shown) might have a central circular header and a concentric annular header. Furthermore a module might incorporate sealing means other than the O-rings 32 described above for sealing the sludge inlet and outlet ports of the housing to the module, as long as the seals can withstand a pressure difference of several atmospheres. It will be appreciated that the bolts 56 enable the force with which the module 24 is urged into engagement with the sludge inlet and outlet ports to be adjusted.

**Claims**

1. A liquid treatment apparatus including a housing (12) and a module (24) insertable into the housing so as to be substantially enclosed within the housing, the module comprising a plurality of parallel tubes (28) each having a wall permeable to at least a component of a liquid undergoing treatment, and the housing being adapted to collect a permeate liquid and defining an outlet port (18) for the permeate liquid, characterised in that the housing (12) is open at one end for insertion of the module, and at the other end defines an inlet port (20) and an outlet port (21) for the liquid undergoing treatment, and that the apparatus includes means (30, 31, 32) such that on insertion into the housing the module comes into sealing engagement with the inlet port and the outlet port so that the tubes provide at least part of a path for the liquid undergoing treatment from the inlet port to the outlet port, this liquid path involving just one flow reversal for the liquid; and means (56) for clamping the module to the housing at the open end of the housing.

2. A liquid treatment apparatus as caimed in Claim 1 also comprising means (15) independent of the clamping means for sealing the open end of the housing.

3. A liquid treatment apparatus as claimed in Claim 1 or Claim 2 wherein the module (24) includes two header chambers (34, 35) at the insertable end of the module, one of which comes into communication with the inlet port (20) and the other of which comes into communication with the outlet port (21) on insertion of the module, each tube (28) communicating with either one or other of the two header chambers at the insertable end, and a single header chamber (52) at the other end of the module with which all the tubes communicate.

**Patentansprüche**

1. Vorrichtung zur Behandlung von Flüssigkeiten, mit einem Gehäuse (12) und einem in das Gehäuse so einsetzbaren Modul (24), daß es im wesentlichen innerhalb des Gehäuses eingeschlossen ist, wobei das Modul eine Anzahl paralleler Rohre (28) aufweist, die jeweils eine für mindestens eine Komponente einer der Behandlung unterzogenen Flüssigkeit durchlässige Wand haben, und das Gehäuse zum Auffangen einer Sickerflüssigkeit eingerichtet ist sowie eine Auslaßöffnung (18) für die Sickerflüssigkeit bildet, dadurch gekennzeichnet, daß das Gehäuse (12) am einen Ende zum Einsetzen des Moduls offen ist und am anderen Ende eine Einlaßöffnung (20) und eine Auslaßöffnung (21) für die der Behandlung unterzogene Flüssigkeit bildet, und daß die Vorrichtung solche Mittel (30, 31, 32), daß das Modul beim Einsetzen in das Gehäuse in dichtenden Eingriff mit der Einlaßöffnung und der Auslaßöffnung gelangt, so daß die Rohre mindestens einen Teil eines Weges für die der Behandlung unterzogene Flüssigkeit von der Einlaßöffnung zur Auslaßöffnung vorsehen, wobei dieser Weg lediglich eine Strömungsumkehrung für die Flüssigkeit umfaßt, und am offenen Ende des Gehäuses Mittel (56) zum Festspannen des Moduls am Gehäuse aufweist.

2. Vorrichtung zum Behandeln von Flüssigkeiten nach Anspruch 1, zusätzlich mit von den Festspannmitteln unabhängigen Mitteln (15) zum Abdichten des offenen Endes des Gehäuses.

3. Vorrichtung zum Behandeln von Flüssigkeiten nach Anspruch 1 oder Anspruch 2, wobei das Modul (24) am einsetzbaren Endes des Moduls zwei Sammelkammern (34, 35), von denen beim Einsetzen des Moduls die eine in Verbindung mit der Einlaßöffnung (20) und die andere in Verbindung mit der Auslaßöffnung (21) gelangt, so daß jedes Rohr (28) am einsetzbaren Ende mit entweder der einen oder der anderen Sammelkammer in Verbindung steht, und am anderen Ende des Moduls eine einzige Sammelkammer (52) aufweist, mit der alle Rohre in Verbindung stehen.

**Revendications**

1. Appareil de traitement de liquides, comprenant un corps (12) et un module (24), insérable dans le corps de façon à être sensiblement emprisonné au sein du corps, le module comprenant plusieurs tubes (28) parallèles ayant chacun une paroi perméable à au moins un constituant d'un liquide soumis au traitement, et le corps étant conçu en vue de collecter un liquide de perméation et délimitant un orifice (18) desortie du liquide de perméation, appareil caractérisé en ce que le corps (12) est ouvert à une extrémité pour permettre l'insertion du module et délimite, à l'autre extrémité, un orifice (20) d'entrée et un orifice (21) de sortie du liquide soumis au traitement, et en ce que l'appareil comprend des organes (30, 31, 32) tels que, lors de son insertion dans le corps, le module vient en contact étanche avec l'orifice d'entrée et l'orifice de sortie, de sorte que les tubes constituent au moins une partie d'un trajet que le liquide soumis au traitement parcourt de l'orifice d'entrée vers l'orifice de sortie, ce trajet du liquide impliquant une seule inversion de sens d'écoulement du liquide; et des organes (56) pour fixer le module au corps à l'extrémité ouverte de ce corps.

2. Appareil de traitement de liquides, tel que revendiqué à la revendication 1, comprenant également un organe (15), indépendant de l'organe de serrage ou de fixation, pour assurer la fermeture étanche de l'extrémité ouverte du corps.

3. Appareil de traitement de liquides tel que revendiqué à la revendication 1 ou à la revendication 2, dans lequel le module (24) comprend deux chambres (34, 35) collectrices, à l'extrémité insérable du module, dont l'une vient en communication avec l'orifice (20) d'entrée et l'autre vient en communication avec l'orifice (21) de sortie, lors de l'insertion du module, chaque tube (28) communiquant avec l'une ou l'autre des deux chambres collectrices à l'extrémité insérable, et, à l'autre extrémité du module, une seule chambre (52) collectrice avec laquelle tous les tubes communiquent.

**EP 0 217 568 B1**

*Fig.1.*

*Fig. 2.*

SLUDGE INLET

SLUDGE OUTLET